Europäisches Patentamt

European Patent Office

Office européen des brevets

(19)

(11) Publication number: **0 276 098**
**A1**

## (12) EUROPEAN PATENT APPLICATION

(21) Application number: **88300321.2**

(22) Date of filing: **15.01.88**

(51) Int. Cl.⁴: **A 47 G 27/04**
**E 04 F 21/22, B 29 C 65/42**

(30) Priority: **15.01.87 GB 8700853**

(43) Date of publication of application:
**27.07.88 Bulletin 88/30**

(84) Designated Contracting States: **BE DE GB NL SE**

(71) Applicant: **DURALAY LIMITED**
**Broadway Haslingden**
**Rossendale Lancashire BB4 4LS (GB)**

(72) Inventor: **Porter, David**
**1 Tor View Haslingden**
**Rossendale Lancashire BB4 6AS (GB)**

(74) Representative: **Massey, Alexander et al**
**MARKS & CLERK Suite 301 Sunlight House Quay Street**
**Manchester, M3 3JY (GB)**

(54) **Method for laying carpeting.**

㊼ A method of laying carpetting includes the steps of laying a roll or strip of underlay flat on a floor to be carpetted with its ends secured to the floor, adhering the underlay to the floor by spaced spots of adhesive along the length of the laid and end-secured roll or strip of underlay, and applying pressure to the underlay at or adjacent the adhesive spots to ensure adhesion to the floor. The adhesive is preferably a hot melt adhesive, and the adhesive spots are applied between the underlay and the floor by a hot melt gun having a nozzle which is pushed completely through the underlay into contact with the floor to expel a small spot or quantity of adhesive which is immediately caused to contact the underlay, upon withdrawal of the nozzle, due to the application of the aforesaid pressure.

**Description**

METHOD FOR LAYING CARPETING

This invention relates to a method of laying carpeting especially but not exclusively contract carpeting and while reference is hereinafter made to contract carpeting it is to be clearly understood that domestic carpeting is not excluded from the scope of this invention.

Conventionally contract carpeting is laid in two ways, namely stretch fitted or adhesion fitted.

With stretch fitting, the carpeting is loosely laid over an underlay in strip form with the underlay strips being seamed together by sewing or by double-sided adhesive tape, the carpeting being stretched onto gripper railing secured around the perimeter of the area being carpeted. Such contract carpeting is, however, due to substantially greater pedestrian traffic than similarly laid domestic carpeting, subject to rucking which is not only unsightly but also, on occasion, dangerous.

With adhesive fitting, the carpeting is glued directly to the floor, i.e. there is no underlay between the carpeting and the supporting floor. Drawbacks of this method include no cushioning commonly provided by underlay and thereof less foot comfort, greater resonance, and destruction of carpeting on removal thereof for replacement or repair purposes and resulting floor damage requiring repair before new carpeting can be laid.

The drawbacks of these two conventional carpet laying methods have substantially been overcome by a method devised by the applicants called "DURAFIT", and currently used by carpeting contractors which method comprises the steps of laying a grid of double-sided adhesive tape over the area to be carpeted, laying strips of underlay side-by-side over the adhesive tape grid, pressing the underlay strips onto the adhesive tape grid to provide a cushion surface over the area to be carpetted, spreading adhesive over the underlay now adhered to the floor, laying carpeting over the underlay, and pressing the carpeting down onto the adhesive supporting surface of the underlay.

This "DURAFIT" method of the applicants is, therefore, in effect a combination of the two aforesaid conventional carpet laying methods in that an underlay is used which can be lifted without damage to the supporting floor and the carpeting, when laid, is structurally fixed due to complete area adhesion and, therefore, no risk of rucking.

However with this "DURAFIT" method the separate and distinct operations of laying the double-sided adhesive tape grid, laying the side-by-side underlay strips over the adhesive tape grid and the pressing of the underlay down onto the adhesive tape grid is time consuming and consequently considered less than desirable by carpeting contractors, and accordingly the applicants have devised a method of laying carpeting having the advantages of the "DURAFIT" method but speedier in operation.

According to the present invention the method of laying carpetting includes the steps of laying a roll or strip of underlay flat on a floor to be carpetted with its ends secured to the floor, adhering the underlay to the floor by spaced spots of adhesive along the length of the laid and end-secured roll or strip of underlay, and applying pressure to the underlay at or adjacent the adhesive spots to ensure adhesion to the floor.

Preferably, the spaced spots of adhesive, which adhesive is preferably a hot melt adhesive, are applied between the underlay and the floor by a hot melt gun having a nozzle which is pushed completely through the underlay into contact with the floor to expel a small spot or quantity of adhesive which is immediately caused to contact the underlay, upon withdrawal of the nozzle, due to the application of the aforesaid pressure.

Preferably, the pressure is applied by an operative using a flat heavy weight which the operative simultaneously presses and twists onto the underlay above the spot of adhesive to spread the latter at the floor/underlay interface and so effect the aforesaid adhesion.

Preferably, the initial laying of the underlay is achieved by adhering one end of the roll or strip of underlay to the floor by means of double-sided adhesive tape, gliding or forcing the underlay flat along its entire length on the floor, and fixing its other end onto double-sided adhesive tape securement on the floor at said other end.

The end securement of the underlay may be by mechanical means such, for example, as gripper rails.

It will thus be seen that the underlay is laid and adhered to the floor under pressure to all intents and purposes in a single step.

Like the "DURAFIT" method, once the underlay is laid in accordance with the method of this invention, the underlay surface is covered with adhesive, the carpeting laid thereover and pressed down into position onto the underlay.

An example of the present invention will now be described.

A strip of rolled underlay is secured at one end to a floor to be carpeted by double-sided adhesive tape say across the end at the area perimeter and for a short distance down both lateral edges.

A carpet fitter then removes all fullness by gliding the underlay down the length of the underlay and fixing the other end of the underlay also onto double-sided adhesive tape thus holding the underlay completely flat in preparation for the hot melt spot welding or securement.

Hot melt fixing is commenced down one underlay edge by pushing completely through the underlay a small diameter tubular nozzle of a hot melt gun to dispense onto the floor a spot of hot melt adhesive, say, of the EVA type. Permanent bonding is accomplished by applying pressure using a heavy flat bottomed weight with slight twisting motion on top of the underlay immediately over the injection point as soon as the nozzle is removed. The other underlay edge is then treated in the same manner.

Fixing within the underlay is carried out in the same manner using, for example, three spots across the width of the underlay along its length.

It is considered that adhesive spotting at 6 inch intervals along the edges of the underlay strip and 12 inch intervals within the area of the underlay strip will provide satisfactory adhesion. These intervals are given only by way of example and can be varied to suit requirements.

As aforesaid, when the area to be carpeted is fully covered with underlay according to this invention then the exposed underlay surface is fully covered with adhesive, the carpeting is laid on top, and is pressed down to adhere to the underlay previously spot adhered or glued to the floor.

The method of carpeting according to this invention can be used with any kind of flooring, for example wood, concrete parquet and vinyl.

The underlay used can be of any known type and the carpeting can be woven, non-woven or tufted of any grade.

## Claims

1. A method of laying carpetting includes the steps of laying a roll or strip of underlay flat on a floor to be carpetted with its ends secured to the floor, adhering the underlay to the floor by spaced spots of adhesive along the length of the laid and end-secured roll or strip of underlay, and applying pressure to the underlay at or adjacent the adhesive spots to ensure adhesion to the floor.

2. A method as claimed in claim 1, comprising the step of adhering the underlay to the floor by spaced spots of adhesive across the width of the laid and end-secured roll or strip of underlay.

3. A method as claimed in claim 1 or 2, in which the spaced spots of adhesive are applied between the underlay and the floor by a nozzle which is pushed completely through the underlay into contact with the floor to expel a small spot or quantity of adhesive which is immediately caused to contact the underlay, upon withdrawal of the nozzle, due to the application of the aforesaid pressure.

4. A method as claimed in claim 3, in which the adhesive is a hot melt adhesive, and the application nozzle is part of a hot melt gun.

5. A method as claimed in any one of claims 1 to 4, in which the pressure is applied by an operative using a flat heavy weight which the operative simultaneously presses and twists onto the underlay above the spot of adhesive to spread the latter at the floor/underlay interface and so effect the aforesaid adhesion.

6. A method as claimed in any one of claims 1 to 5, in which the initial laying of the underlay is achieved by adhering one end of the roll or strip of underlay to the floor by means of double-sided adhesive tape, gliding or forcing the underlay flat along its entire length on the floor, and fixing its other end onto double-sided adhesive tape securement on the floor at said other end.

7. A method as claimed in claim 6, in which, instead of using double-sided adhesive tape for end securement of the flat laid underlay, a mechanical means of end securement is employed.

8. A method as claimed in claim 7, in which the mechanical securement means are gripper rails.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BE-A- 853 033 (ETABLISSEMENTS LOUIS DE POORTERE) * Page 5, lines 3-14; page 5, line 27 - page 6, line 2; page 3, lines 25-28 * | 1,6-8 | A 47 G 27/04 E 04 F 21/22 B 29 C 65/42 |
| A | FR-A-1 574 310 (SOCIETE BREVETEX) * Figure 2 * | 1,2,5 | |
| A | FR-A-2 348 957 (WEBER ET BROUTIN) * Figure 1; claims 5,6 * | 1,2 | |
| A | CA-A- 915 052 (LANCE) * Page 1, lines 7-9 * | 4 | |
| A | US-A-4 613 396 (SCARBOROUGH) | | |

TECHNICAL FIELDS SEARCHED (Int. Cl.4)

A 47 G
E 04 F
B 29 C

The present search report has been drawn up for all claims

| Place of search | Date of completion of the search | Examiner |
|---|---|---|
| THE HAGUE | 12-04-1988 | BEUGELING G.L.H. |